# EUROPEAN PATENT APPLICATION

(11) **EP 4 808 103 A1**
(43) Date of publication of application: **16.09.2026**
(21) Application number: 26164178.1
(22) Date of filing: 12.03.2026
(51) Int. Cl.: H04N 1/00

(54) **COMMUNICATION METHOD EXECUTED IN IMAGE FORMING APPARATUS**

(30) Priority: 14.03.2025 JP 2025041566
(71) Applicant: CANON KABUSHIKI KAISHA, Ohta-ku Tokyo 146-8501 (JP)
(72) Inventor: KOYAMA, Hayato, Ohta-ku, Tokyo, 146-8501 (JP); YOSHIMOTO, Tetsuhiro, Ohta-ku, Tokyo, 146-8501 (JP); IKEDA, Shinya, Ohta-ku, Tokyo, 146-8501 (JP); KUROKI, Kenji, Ohta-ku, Tokyo, 146-8501 (JP); TANAKA, Nobuhiko, Ohta-ku, Tokyo, 146-8501 (JP); NOMURA, Yoshihisa, Ohta-ku, Tokyo, 146-8501 (JP); SUZUKI, Shinya, Ohta-ku, Tokyo, 146-8501 (JP)
(74) Representative: TBK

(57) **Abstract**

An image forming apparatus (10) comprises a plurality of control devices (201; 210; 220) including at least a first control device and a second control device, and a communication line (202; 203) for communication between the plurality of control devices. The first control device includes a first communication unit (902; 907) configured to, in a first communication mode, transmit a control instruction to the second control device or receive information from the second control device, and, in a second communication mode, communicate time information for synchronizing a time that serves as a reference for execution timing of the control instruction in the second control device, and a first timer (906) configured to indicate a time that serves as a reference for time-based synchronization in the second communication mode.

## Description

### TECHNICAL FIELD

The present disclosure relates to a communication method that is executed in an image forming apparatus.

### BACKGROUND

An image forming apparatus includes a plurality of control boards and these control boards transmit and receive control information via serial communication. To reduce image defects such as color deviation, position deviation, and the like, there is a demand for time-based synchronization of the plurality of control boards. Japanese Patent Laid-Open No. 2023-030584 describes a serial communication system in which a master device and a slave device are connected via a clock line, a command line, and a status line, and the master device and the slave device perform time-based synchronization via the status line.

### SUMMARY

The technique in Japanese Patent Laid-Open No. 2023-030584 can achieve highly accurate time-based synchronization. However, the number of status lines increases proportionally to the number of slave devices.

The present disclosure in its first aspect provides an image forming apparatus as specified in claim 1. Optional features are specified in claim 2 to 18.

Features of the present disclosure will become apparent from the following description of embodiments with reference to the attached drawings.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a diagram for describing an image forming apparatus.
FIG. 2 is a diagram for describing zone architecture.
FIG. 3 is a diagram for describing an edge device and a control mechanism.
FIG. 4 is a diagram for describing an edge device and a control mechanism.
FIG. 5 is a diagram for describing zone allocation.
FIG. 6 is a diagram for describing a control mechanism.
FIG. 7 is a diagram for describing an edge device.
FIG. 8 is a diagram for describing a zone device.
FIG. 9 is a diagram for describing a central device.
FIG. 10 is a diagram for describing a connection relationship between devices.
FIG. 11 is a sequence diagram illustrating time-based synchronized communication.
FIG. 12 is a flowchart illustrating a control method of a central device.
FIG. 13 is a flowchart illustrating a control method of a zone device.
FIG. 14 is a flowchart illustrating a control method of an edge device.
FIG. 15 is a sequence diagram illustrating time-based synchronized communication.
FIG. 16 is a flowchart illustrating a control method of a central device.
FIG. 17 is a flowchart illustrating a collective synchronization mode.
FIGS. 18A to 18C are diagrams for describing communication prohibited flags.
FIG. 19 is a flowchart illustrating a limited synchronization mode.
FIG. 20 is a flowchart illustrating a communication method of a control instruction and the like.
FIG. 21 is a flowchart illustrating a control method of a central device.
FIG. 22 is a flowchart illustrating a control method of a zone device.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### 1. First Embodiment Example

### 1-1. Apparatus Configuration

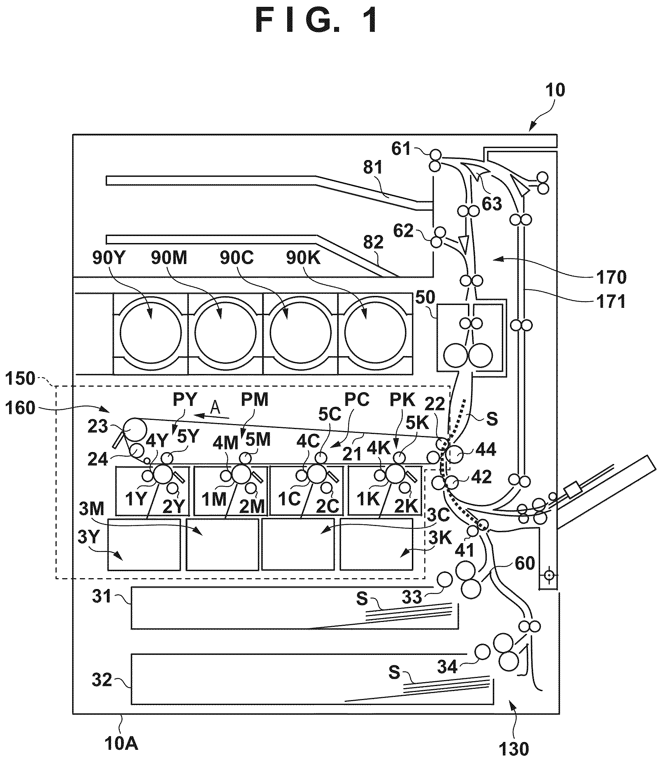

FIG. 1 illustrates a schematic structure of an image forming apparatus 10. The term "front" used in the following description refers to the front side of the image forming apparatus 10 illustrated in FIG. 1. The term "back (back surface)" refers to the back side of the image forming apparatus 10 illustrated in FIG. 1. The term "right" refers to the right side of the image forming apparatus 10 illustrated in FIG. 1. The term "left" refers to the left side of the image forming apparatus 10 illustrated in FIG. 1. The term "front side" is the side where the user operates the image forming apparatus 10 when performing maintenance work. For example, the control panel is disposed on the front side. Cassettes 31 and 32 that house printing material S are pulled out from the back side to the front side. The term "up-and-down direction" refers to the up-and-down direction when the image forming apparatus 10 is placed on a placement surface such as a floor. Thus, the down direction is the direction of gravity, and the up direction is the direction opposite to the direction of gravity.

The image forming apparatus 10 includes a main body 10A. The main body 10A includes an image forming engine 150. The image forming engine 150 forms a toner image on the printing material S based on an image signal received from a document scanning apparatus that scans an image of a document or an external terminal (not illustrated) or the like such as a personal computer. The image forming engine 150 includes image forming units PY, PM, PC, and PK, an intermediate transfer belt unit 160, and the like. The image forming units PY, PM, PC, and PK form yellow (Y), magenta (M), cyan (C), and black (K) toner images and transfer the toner images to an intermediate transfer belt 21.

A supply unit 130 supplies the printing material S to the image forming engine 150. The supply unit 130 includes the cassettes 31 and 32, feeding rollers 33 and 34, and the like. The cassettes 31 and 32 each house a plurality of the printing material S. The feeding roller 33 picks up the printing material S housed in the cassette 31 and feeds it to a conveyance path 60. The feeding roller 34 picks up the printing material S housed in the cassette 32 and feeds it to a conveyance path 60. For example, the conveyance path 60 is provided in such a manner that the printing material S is conveyed from down to up (in other words, a vertical conveyance method). Examples of the printing material S include paper (for example, regular paper, thick paper, rough paper, textured paper, and coated paper), plastic film, fabric, and various other types of sheet material.

A pre-registration roller pair 41 and a registration roller pair 42 are disposed on the conveyance path 60. The pre-registration roller pair 41 corrects the skew of the printing material S. Specifically, the leading end of the printing material S conveyed by the pre-registration roller pair 41 is abutted against a nip portion of the registration roller pair 42 that has stopped rotating. In this manner, the printing material S is looped and the skew of the printing material S is corrected. The intermediate transfer belt 21 is disposed above the registration roller pair 42 serving as a pair of rotary bodies. The registration roller pair 42 conveys the printing material S to a secondary transfer unit at a timing that matches the timing of the toner image on the intermediate transfer belt 21 being transferred to the printing material S. The registration roller pair 42 is disposed on the upstream side of the secondary transfer unit and at a position closest to the secondary transfer unit in the conveyance direction (up direction) of the printing material S conveyed along the conveyance path 60. The secondary transfer unit is formed of a secondary transfer inside roller 22 and a secondary transfer outside roller 44 on opposite sides of the intermediate transfer belt 21 serving as a transfer member (first transfer member, intermediate transfer body). The secondary transfer unit is a nip portion that transfers a toner image onto the printing material S from the intermediate transfer belt 21 by applying a predetermined pressing force and a secondary transfer voltage to the printing material S and the toner image.

A process of forming an image conveyed to the secondary transfer unit performed at a similar timing to the process of conveying the printing material S to the secondary transfer unit described above will now be described. First, image forming units PY to PK will be described. However, the image forming units PY to PK are basically the same except for the color of the toner. Thus, as a representative, the yellow image forming unit PY will be described below. The description of the image forming unit PY can be applied to the description of the image forming units PM, PC, and PK.

The image forming unit PY includes a photosensitive drum 1Y, a charging device 2Y, an exposure device 3Y, and a developing device 4Y. The charging device 2Y uses a predetermined charging voltage to uniformly charge the surface of the rotating photosensitive drum 1Y. The exposure device 3Y is driven on the basis of an image signal and emits laser light at the surface of the rotating photosensitive drum 1Y. In this manner, an electrostatic latent image is formed. The electrostatic latent image is conveyed to the developing device 4Y by the rotation of the photosensitive drum 1Y. The developing device 4Y develops the electrostatic latent image using the toner supplied from a toner bottle 90Y and forms a toner image. The developing device 4Y includes a developing sleeve that carries a development agent including toner and a carrier, and the toner is supplied to the photosensitive drum 1 by the rotation of the developing sleeve. A predetermined development voltage is applied to the developing sleeve. The toner is consumed as development is performed. The toner bottle 90Y is a container that houses toner for refilling. The toner bottle 90Y is rotationally driven at the appropriate timing, and the developing device 4Y is refilled with toner from the toner bottle 90Y.

A primary transfer roller 5Y is disposed on the opposite side of the intermediate transfer belt 21 from the photosensitive drum 1Y. A primary transfer voltage is applied to the primary transfer roller 5Y and the primary transfer roller 5Y transfers the toner image formed on the photosensitive drum 1Y to the intermediate transfer belt 21 (primary transfer). After the primary transfer is complete, the toner remaining on the photosensitive drum 1Y is removed by a photosensitive drum cleaner.

The intermediate transfer belt 21 is supported at tension by the secondary transfer inside roller 22, a driving roller 23, a tension roller 24, and the like and is an endless belt that rotates in the direction of arrow A in the diagram. The image forming units PY to PK each execute an image forming process in parallel. Accordingly, toner images of four colors are superimposed in order on the intermediate transfer belt 21, and a full color image is formed. When the intermediate transfer belt 21 moves, the toner image is conveyed to the secondary transfer unit. Note that the primary transfer rollers 5Y to 5K, the intermediate transfer belt 21, the secondary transfer inside roller 22, the driving roller 23, and the tension roller 24 are integrated as the intermediate transfer belt unit 160.

**In** the secondary transfer unit, the arrival timing of the printing material S and the arrival timing of the full color toner image are the same. Thus, the toner image is transferred (secondary transfer) to the printing material S from the intermediate transfer belt 21. After the secondary transfer is complete, the toner remaining on the intermediate transfer belt 21 is removed by a belt cleaner.

**The** printing material S with the transferred toner image is further conveyed along the conveyance path 60 to a fixing device 50. The fixing device 50 applies heat and pressure to the printing material S and the toner image. In this manner, the toner image is fixed to the printing material S. The fixing device 50 includes a fixing roller heated by a heater (not illustrated) and a pressing roller that comes into contact with the rotating fixing roller and forms a fixing nip portion. The fixing device 50 controls the power supplied to the heater in such a manner that the temperature of the heater becomes a target temperature. Furthermore, the fixing device 50 rotates the pressing roller at a designated rotational speed.

The printing material S with a toner image fixed via the fixing device 50 is further conveyed upward along the conveyance path 60 and is then discharged outside by a discharge unit 170. The discharge unit 170 includes discharge rollers 61 and 62 and a flapper 63. The discharge rollers 61 and 62 discharge the printing material S to discharge trays 81 and 82 respectively.

In a case where the operation mode is double-sided mode in which a toner image is formed on both sides of the printing material S, a toner image is also formed on a second surface of the printing material S with an image formed on a first surface. Accordingly, the printing material S is conveyed to a sub-conveyance path 171. Specifically, the printing material S is conveyed via the forward rotation of the discharge roller 61 until the trailing end of the printing material S passes the flapper 63. Thereafter, the printing material S is conveyed to the sub-conveyance path 171 by the reverse rotation of the discharge roller 61. The printing material S conveyed to the sub-conveyance path 171 is returned once again to the registration roller pair 42. The subsequent conveyance and image forming process for the second surface are similar to that for the first surface. The printing material S with an image also formed on the second surface is discharged outside by the discharge unit 170.

### 1-2. Control System

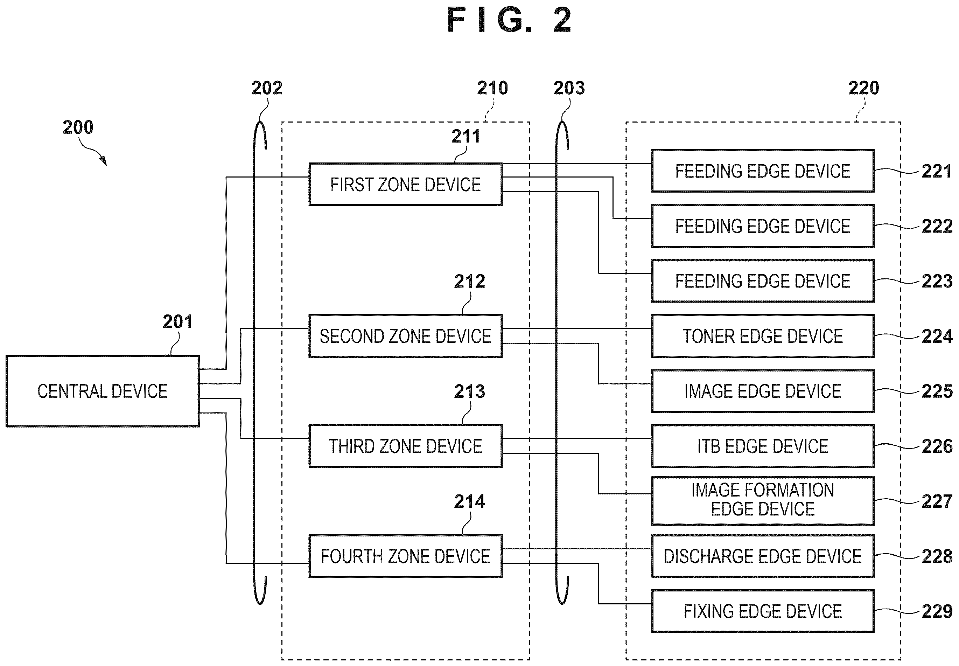

FIGS. 2 to 5 illustrate a zone architecture used in a control system 200 of the image forming apparatus 10. The control system 200 includes a central device 201, a zone device 210, an edge device 220, and various types of control mechanisms 300. The central device 201, the zone device 210, and the edge device 220 are each implemented by hardware such as a CPU, for example. A portion or all of these devices may be implemented by a large-scale integrated circuit (LSI), an ASIC, a field-programmable gate array, or similar hardware. A portion or all of these devices may be implemented by cooperation of software and hardware.

In the control system 200, the central device 201 is the top-level controller and may be referred to as a main controller. The central device 201 is connected to the plurality of zone devices 210 via communication lines 202. Also, the plurality of zone devices 210 are each connected to one or more of the edge devices 220 via communication lines 203. The plurality of edge devices 220 are each connected to one or more of the control mechanisms 300 via signal lines 204. The communication lines 202 and the communication lines 203 include a clock line and a command line and do not include a status line, for example. A clock line is a communication line for transmitting a clock signal for communication. A command line is a communication line for transmitting a control instruction or control information.

The central device 201 controls the plurality of edge devices 220 via any of the plurality of zone devices 210. In other words, the central device 201 communicates with the edge devices 220 via the zone devices 210 and controls the edge devices 220. The zone device 210 is an intermediate controller that converts a control command (command) received from the central device 201 into a control instruction for the edge device 220 in accordance with a predetermined rule. Also, the zone device 210 specifies the destination of the control instruction and transmits the control instruction to the edge device 220 which is specified as the destination. The command may include the content of the control instruction and identification information indicating the destination of the control instruction. The edge device 220 controls the load devices (control mechanisms 300) in accordance with a control instruction. Note that control command (command), control instruction, control information, and control signal are all simply names used for convenience, and these names may be substituted for one another.

When the zone device 210 receives output information from the edge device 220 under its control, the zone device 210 edits the output information as necessary and transmits this to the central device 201.

For the connection method between the central device 201 and the zone devices 210 and the connection method between the zone devices 210 and the edge devices 220, various methods may be used. For example, as a physical layer, a controller area network (CAN), Ethernet (registered trademark), RS-232, RS-485, low-voltage differential signaling (LVDS), or the like may be used. As the communication protocol, for example, CAN open, TCP/IP, EtherCAT, or the like may be used. These are merely examples. For the network topology, any of a tree type, a star type, or a ring type may be used or a combination thereof may be used.

As illustrated in FIG. 2, as the zone device 210, a first zone device 211, a second zone device 212, a third zone device 213, and a fourth zone device 214 are included. However, it is sufficient that the number of zone devices 210 is two or more.

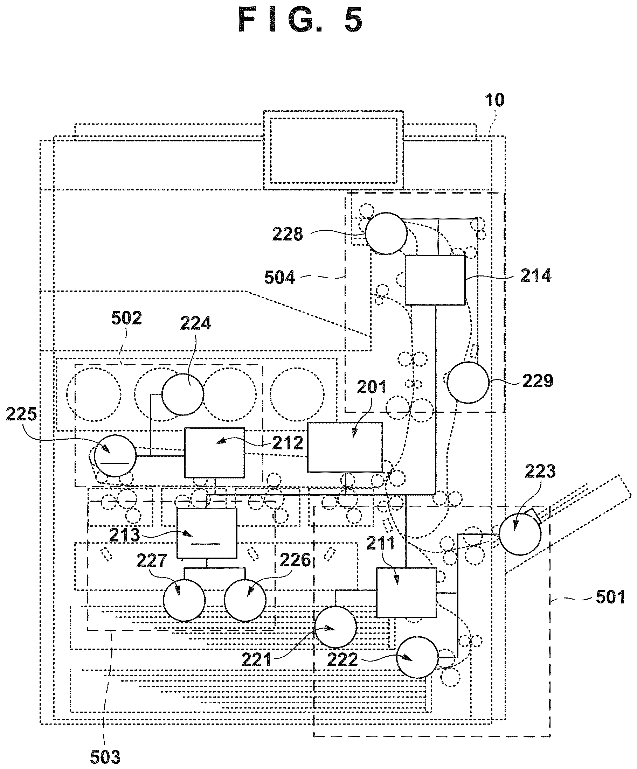

As illustrated in FIG. 5, the image forming apparatus 10 is divided into a first zone 501, a second zone 502, a third zone 503, and a fourth zone 504. The first zone 501 is a load zone that handles feeding and conveying the printing material S. The second zone 502 is a load zone including a load involved in refilling toner. The third zone 503 is a load zone including a load involved in image formation. The fourth zone 504 is a load zone including a load involved in image fixing, conveying, and discharging.

When the central device 201 receives a print job, the central device 201 determines an image-forming operation in accordance with the content of the print job. The content of the print job, for example, includes the size (for example, A4, A4R, or A3) of the printing material S, the type (for example, thickness, grammage, and coated or not) of the printing material S, the feeding port, and the discharge port. The feeding port, for example, may include the cassettes 31 and 32, a manual feed tray, and a feeding unit connected to the image forming apparatus 10 as an option. The discharge port includes the discharge trays 81 and 82. The size and type of the printing material S are used to set the conveyance speed and the fixing temperature of the printing material S. The central device 201 transmits in order a fixing command, an image formation command, a feed command, and a discharge command in accordance with the image-forming operation. Below, the operations relating to these control commands will be described per zone.

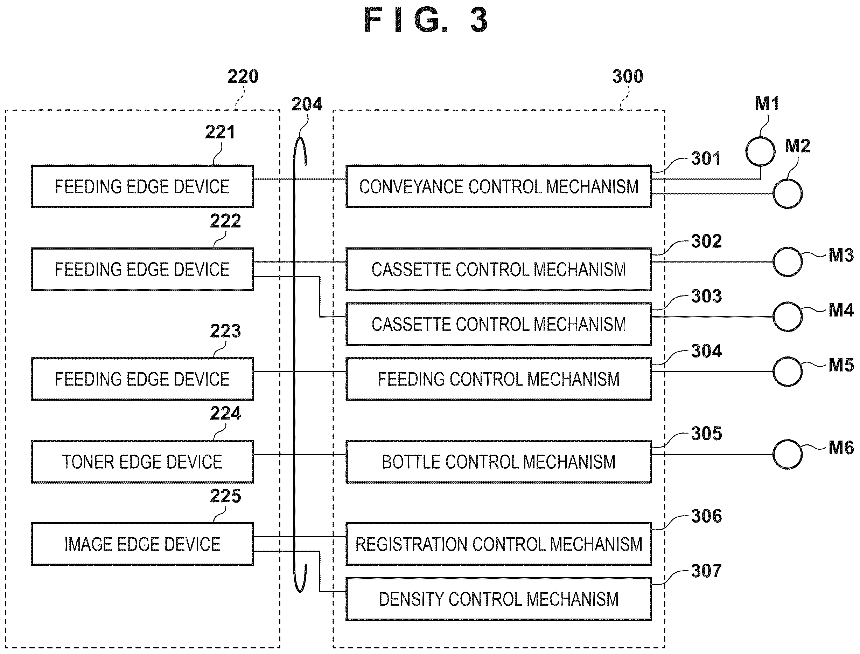

The first zone device 211 is disposed in the first zone 501. The first zone device 211 controls feeding edge devices 221, 222, and 223 disposed in the first zone 501. As illustrated in FIG. 3, the feeding edge device 221 controls a conveyance control mechanism 301. The conveyance control mechanism 301 includes a motor M1 that rotationally drives the pre-registration roller pair 41 and a motor M2 that rotationally drives the registration roller pair 42. A feeding edge device 222 controls cassette control mechanisms 302 and 303. The cassette control mechanism 302 includes a motor M3 that rotationally drives the feeding roller 33. The cassette control mechanism 303 includes a motor M4 that rotationally drives the feeding roller 34. The feeding edge device 223 controls a feeding control mechanism 304. The feeding control mechanism 304 includes a motor M5 that rotationally drives a feeding roller that feeds the printing material S placed on the manual feed tray (multi-purpose tray).

When a feed command is received from the central device 201, the first zone device 211 identifies the edge device 220 which is the target of the feed command. The feed command may include a feed instruction and identification information (for example, the cassette 31) of the feeding mechanism to execute feeding. The first zone device 211 may compute the rotational speed of the motors M1 and M2 based on the feed command. In a case where the identification information identified from the feed command indicates the feeding edge device 221, the feeding edge device 222, and the cassette control mechanism 302, the feed instruction is transmitted to the feeding edge devices 221 and 222. When the feeding edge device 221 receives a feed instruction, the feeding edge device 221 drives the conveyance control mechanism 301 in accordance with the feed instruction. When the feeding edge device 222 receives a feed instruction, the feeding edge device 222 drives the cassette control mechanism 302 in accordance with the feed instruction. The feeding edge device 222 selects the cassette control mechanism 302 based on the identification information included in the feed instruction. Note that in some cases, the cassette control mechanism 303 may be designated via the feed instruction. In a case where the identification information identified from the feed command indicates the feeding edge device 223, the feed instruction is transmitted to the feeding edge device 223. The feeding edge device 223 drives the feeding control mechanism 304.

**As** illustrated in FIG. 5, the second zone device 212 is disposed on the second zone 502. As illustrated in FIG. 2, the second zone device 212 controls a toner edge device 224 and an image edge device 225 disposed in the second zone 502. As illustrated in FIG. 3, the toner edge device 224 controls a bottle control mechanism 305. The bottle control mechanism 305 includes a motor M6 that rotationally drives the toner bottles 90Y, 90M, 90C, and 90K. The image edge device 225 controls a registration control mechanism 306 and a density control mechanism 307. The registration control mechanism 306 controls the formation position of a toner image on the printing material S. The density control mechanism 307 controls the density of a toner image.

When the second zone device 212 receives an image formation command, the second zone device 212 transmits an image formation instruction to the image edge device 225. When the image edge device 225 receives the image formation instruction, the image edge device 225 causes the registration control mechanism 306 and the density control mechanism 307 to operate in accordance with the image formation instruction. When the second zone device 212 receives a toner refill command, the second zone device 212 transmits a refill instruction to the toner edge device 224. When the toner edge device 224 receives the refill instruction, the toner edge device 224 drives the motor M6 of the bottle control mechanism 305 and supplies toner from the toner bottle 90Y or the like to the image forming unit PY or the like.

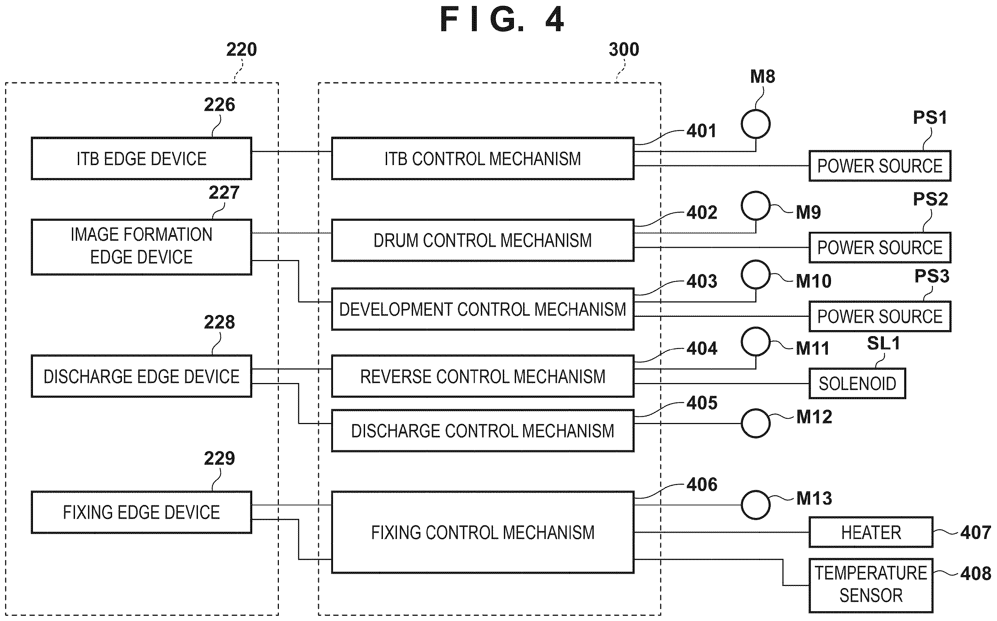

As illustrated in FIG. 5, the third zone device 213 is disposed in the third zone 503. As illustrated in FIG. 2, the third zone device 213 controls an ITB edge device 226 and an image formation edge device 227 disposed in the third zone 503. ITB is an abbreviation for intermediate transfer belt. As illustrated in FIG. 4, the ITB edge device 226 controls an ITB control mechanism 401. The ITB control mechanism 401 includes a motor M8 that rotationally drives the driving roller 23 that drives the intermediate transfer belt 21. The ITB control mechanism 401 includes a power source PS1 that generates a primary transfer voltage. The image formation edge device 227 controls a drum control mechanism 402 and a development control mechanism 403. The drum control mechanism 402 includes a motor M9 that rotationally drives the photosensitive drums 1Y, 1M, 1C, and 1K. The drum control mechanism 402 includes a power source PS2 that generates a charging voltage. The development control mechanism 403 includes a motor M10 that rotationally drives each developing sleeve of the developing device 4Y, 4M, 4C, or 4K and a power source PS3 that generates a development voltage.

When the third zone device 213 receives an image formation command, the third zone device 213 transmits an image formation instruction to the ITB edge device 226 and the image formation edge device 227. The image formation command may include an image formation parameter. Examples of the image formation parameter include a constant speed drive, a charging voltage (for example, -900 V), a development voltage (for example, -740 V), a primary transfer voltage (for example, 3000 V), and the like. The third zone device 213 may compute a control parameter, such as the rotational speed of the motor M8 of the ITB control mechanism 401, the rotational speed of the motor M9 of the drum control mechanism 402, the rotational speed of the motor M10 of the development control mechanism 403, and the like, based on the image formation command. The third zone device 213 may compute the control parameter such as the charging voltage, the development voltage, the primary transfer voltage, and the like based on the image formation command. The image formation instruction may include these control parameters. When the ITB edge device 226 receives an image formation instruction, the ITB edge device 226 drives the ITB control mechanism 401 in accordance with the control parameter designated by the image formation instruction. In other words, the ITB control mechanism 401 drives the motor M8 at the designated rotational speed and generates a primary transfer voltage of the designated value. When the image formation edge device 227 receives an image formation instruction, the image formation edge device 227 drives the drum control mechanism 402 and the development control mechanism 403 using the control parameter designated by the image formation instruction. The drum control mechanism 402 drives the motor M9 at the designated rotational speed and also generates the charging voltage of the designated value. The development control mechanism 403 drives the motor M10 at the designated rotational speed and generates a development voltage of the designated value.

**As** illustrated in FIG. 5, the fourth zone device 214 is disposed in the fourth zone 504. As illustrated in FIG. 2, the fourth zone device 214 controls a discharge edge device 228 and a fixing edge device 229 disposed in the fourth zone 504. As illustrated in FIG. 4, the discharge edge device 228 controls a reverse control mechanism 404 and a discharge control mechanism 405. The reverse control mechanism 404 includes a motor M11 that drives the discharge roller 61 involved in reverse processing for the printing material S and a solenoid SL1 that drives the flapper 63. The discharge control mechanism 405 includes a motor M12 that drives the discharge roller 61 for discharging the printing material S and a motor M13 that drives the discharge roller 62. A fixing control mechanism 406 includes a motor M14 that rotationally drives the pressing roller of the fixing device 50, a heater 407, and a temperature sensor 408. The temperature sensor 408 detects or measures the temperature of the heater 407.

When the fourth zone device 214 receives a fixing command, the fourth zone device 214 transmits a fixing instruction to the fixing edge device 229. The fixing command may include a fixing parameter such as the fixing temperature (for example, 180°C), the rotational speed of the motor, and the like. The fourth zone device 214 may compute the power to be input to the heater 407 and the rotational speed of the motor M14 based on the fixing temperature. Here, in a case where the heater 407 is driven on/off, the on duty cycle of the heater 407 may be computed. The fixing edge device 229 drives the fixing control mechanism 406 in accordance with the fixing instruction. The fixing control mechanism 406 supplies power to the heater 407 in such a manner that the temperature of the heater 407 becomes the fixing temperature designated by the fixing instruction. The fixing control mechanism 406 drives the motor M14 at the rotational speed designated by the fixing instruction.

When the fourth zone device 214 receives a discharge command, the fourth zone device 214 transmits a discharge instruction to the discharge edge device 228. The discharge edge device 228 drives the discharge control mechanism 405 in accordance with the discharge instruction. The fourth zone device 214 may compute the rotational speed of the motors M11 and M12 based on the discharge command, and the discharge instruction may include the rotational speed. When the fourth zone device 214 receives a reverse command, the fourth zone device 214 transmits a reverse instruction to the discharge edge device 228. The discharge edge device 228 controls the reverse control mechanism 404 in accordance with the reverse instruction.

### 1-3. Communication Control

### 1-3-1. Definitions

Hereinafter, first processing is the communication processing executed between the central device 201 and the zone device 210. Second processing is the communication processing executed between the zone device 210 and the edge device 220.

### 1-3-2. First Processing

### 1-3-2-1. Downlink

**The** central device 201 starts the image-forming operation in accordance with a print job. The central device 201 transmits a predetermined control command to the predetermined zone device 210 in accordance with a control program. When the zone device 210 receives a control command, the zone device 210 decodes the control command in accordance with a predetermined rule and generates a control instruction. The zone device 210 may transmit the control instruction to the edge device 220 in accordance with the destination information included in the control command.

### 1-3-2-2. Uplink

The zone device 210 adds the output information received from the edge device 220 to a communication packet for the central device 201 and transmits the communication packet to the central device 201.

### 1-3-3. Second Processing

### 1-3-3-1. Downlink

**The** zone device 210 identifies the destination of the control instruction in accordance with the predetermined rule and transmits the control instruction to the edge device 220 corresponding to the destination. The edge device 220 generates a control signal in accordance with the control instruction and controls the control mechanisms 300 based on the control signal.

### 1-3-3-2. Uplink

**The** edge device 220 transmits the output information output from the control mechanisms 300 to the zone device 210. The zone device 210 receives the output information from the edge device 220.

### 1-3-4. Other

**The** predetermined rule may include a condition based on the function of the control mechanism 300 associated with the edge device 220, for example. The predetermined rule may include a condition that depends on the zone that the control mechanism 300 belongs to. The predetermined rule may include a condition based on the communication amount, the communication frequency, and the latency between the zone device 210 and the edge device 220 in a predetermined amount of time.

**The** first zone device 211 executes predetermined communication control on the feeding edge device 221, the feeding edge device 222, and the feeding edge device 223. The second zone device 212 executes communication control on the toner edge device 224 and the image edge device 225. The third zone device 213 executes communication control on the ITB edge device 226 and the image formation edge device 227. The fourth zone device 214 executes communication control on the discharge edge device 228 and the fixing edge device 229.

### 1-4. Effects from Zone Architecture

As illustrated in FIG. 5, functional units are grouped and zones (functional blocks) are formed on the basis of association between the control and the position of the functional units in the image forming apparatus 10. In each zone, a plurality of the edge devices 220 are disposed. The zone device 210 relays communication between the central device 201 and the plurality of edge devices 220. Compared to a case in which the central device 201 and the plurality of edge devices 220 are connected directly using a bundle of wires, with the first embodiment example, the required total amount (total distance) of the bundle of wires can be greatly reduced.

By reducing the total amount (total distance) of the bundle of wires, the ease-of-maintenance of the image forming apparatus 10 is improved. The maintenance cost should also be reduced.

### 1-5. Functions Included in Controller

### 1-5-1. Control Mechanism

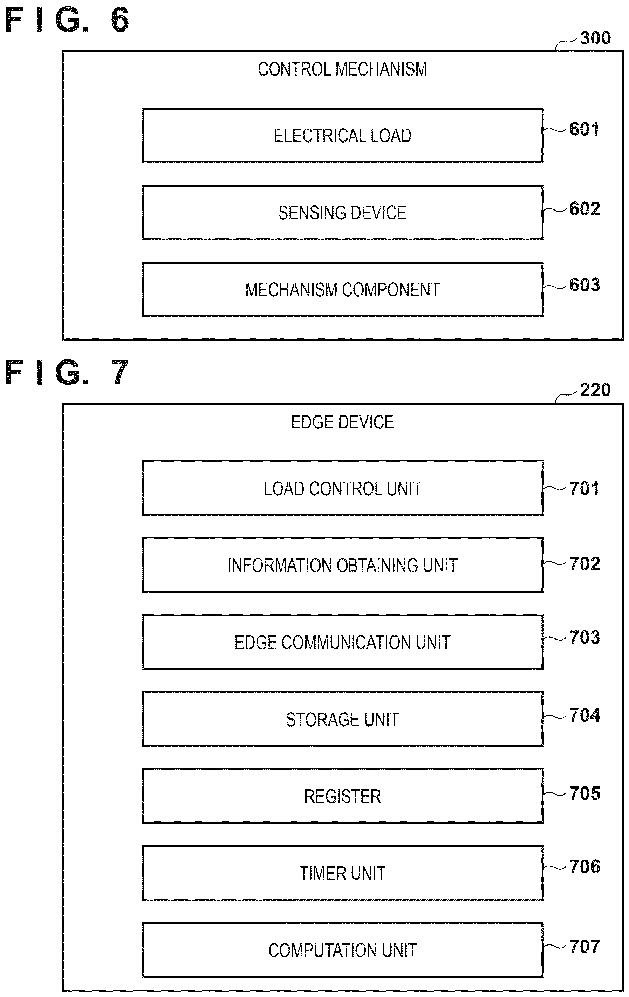

**FIG.** 6 is a diagram illustrating an example of a function included in the control mechanism 300. The control mechanism 300, for example, includes an electrical load 601, a sensing device 602, and a mechanism component 603. The electrical load 601 includes at least one of the motors M11 to M14, the solenoid SL1, the power sources PS1 to PS3, and control circuitry, for example. The electrical load 601 drives the mechanism component 603 (for example, an actuator) based on a control signal or a drive signal supplied from the edge device 220. The sensing device 602 includes various sensors. The sensing device 602 detects the operation of the mechanism component 603 and outputs a detection signal (output signal) indicating the detection result to the edge device 220. The sensing device 602 is not limited to a sensor (for example, the temperature sensor 408) that detects the operation of the mechanism component 603 or an encoder. The sensing device 602 may be any one of an environmental sensor that detects the temperature and humidity of the environment where the image forming apparatus 10 is placed, an image sensor that detects the position of an image formed on the printing material S, a density sensor that detects the density of a toner image, and the like.

### 1-5-2. Edge Device

**FIG.** 7 illustrates an example of a function provided in the edge device 220. The edge device 220, for example, is provided with a load control unit 701, an information obtaining unit 702, an edge communication unit 703, and a storage unit 704. The edge communication unit 703 is a communication circuit for communicating with the zone device 210 or a program module that controls such a communication circuit. The load control unit 701 receives a control instruction transmitted from the zone device 210 via the edge communication unit 703. The load control unit 701 outputs a control signal for controlling the electrical load 601 (for example, the motor M1 to M14, the solenoid SL1) included in the control mechanism 300 in accordance with the control instruction. The electrical load 601 operates in accordance with the control signal. The information obtaining unit 702 obtains the output signal (output information) output from the sensing device 602 of the control mechanism 300. The output information is position information of the mechanism component 603 driven by the electrical load 601 or the like. The information obtaining unit 702 transmits the output signal to the zone device 210 via the edge communication unit 703. For example, the storage unit 704 includes a non-volatile memory such as electrically erasable programmable read-only memory (EEPROM), flash memory, or the like. The storage unit 704 includes a volatile memory such as static random-access memory (SRAM), dynamic random-access memory (DRAM), or the like. The storage unit 704 stores configuration information of the edge device 220, a processing rule of the edge device 220 with respect to a control instruction generated by the zone device 210 from a control command transmitted from the central device 201, and the like. The configuration information of the edge device 220 may include information related to the control mechanism 300 under the control of the edge device 220, for example.

Also, the edge device 220 is provided with a register 705. The load control unit 701 identifies the electrical load 601, which is the controlled device (load device) based on the control information and writes the control signal for controlling the identified electrical load 601 into the register 705. The electrical load 601 is a motor, a solenoid, or the like. In the control mechanism 300, the electrical load 601 drives the mechanism component 603 (actuator) based on the control signal written into the register 705.

**The** edge device 220 further includes a timer unit 706 and a computation unit 707. The timer unit 706, for example, is constituted of a hardware counter that counts up at regular intervals or the like. The timer unit 706 generates time information that serves as a reference for the control timing in the load control unit 701 and the computation unit 707.

The computation unit 707 relays information between the edge communication unit 703 and the load control unit 701. For example, the computation unit 707 generates an instruction for the load control unit 701 by referencing a processing method stored in the storage unit 704 in accordance with a control instruction received via the edge communication unit 703. Also, the computation unit 707 passes the instruction to the load control unit 701 at a timing based on the time information generated by the timer unit 706. The computation unit 707 executes time-based synchronized communication with the zone device 210 via the edge communication unit 703. The computation unit 707 adjusts the time information of the timer unit 706 based on the time information received from the zone device 210. In this manner, the computation unit 707 functions as a time-based synchronization unit.

**The** load control unit 701, the information obtaining unit 702, the timer unit 706, and the computation unit 707 are implemented by hardware such as a CPU, an ASIC, or the like. The edge communication unit 703, the storage unit 704, and the register 705 also may be implemented by hardware such as a CPU, an ASIC, or the like.

### 1-5-3. Zone Device

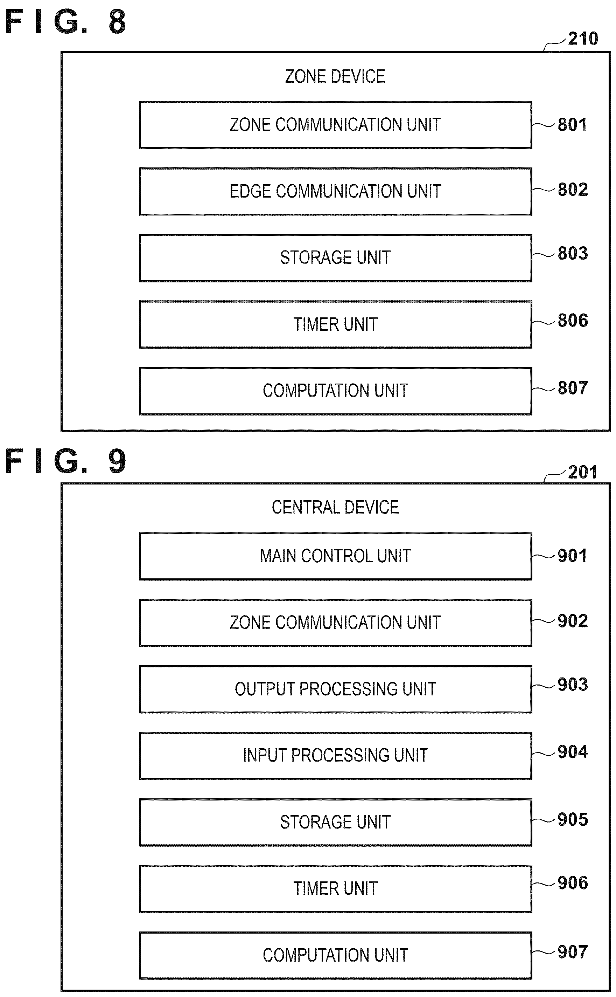

**FIG.** 8 illustrates an example of a function provided in the zone device 210. The zone device 210, for example, is provided with a zone communication unit 801, an edge communication unit 802, and a storage unit 803. The zone communication unit 801 is a communication circuit that communicates with the central device 201 or a program module that controls such a communication circuit. The edge communication unit 802 is a communication circuit that communicates with the edge device 220 or a program module that controls such a communication circuit. The zone communication unit 801 receives a control command from the central device 201, converts the control command into a control instruction for the plurality of edge devices 220, and stores the control instruction in the buffer area of the storage unit 803. The edge communication unit 802 identifies the destination of the control instruction stored in the buffer area and transmits the control instruction to the edge device 220 identified as the destination. The edge communication unit 802 receives output information from the edge device 220 and stores the output information in the buffer area. The zone communication unit 801 reads out the output information from the buffer area, processes the output information as necessary, and transmits the output information to the central device 201.

**The** storage unit 803, for example, includes a non-volatile memory and a volatile memory. The storage unit 803 stores the configuration information of the zone device 210, a rule for converting the control command into a control instruction, a rule for identifying the destination of the control instruction from the control command, a processing rule for the output information, and the like. The configuration information of the zone device 210 may include identification information of the edge device 220 under the control of the zone device 210 and also identification information of the control mechanism 300 under the control of the zone device 210.

**The** zone device 210 further includes a timer unit 806 and a computation unit 807. The timer unit 806, for example, is constituted of a hardware counter that counts up at regular intervals or the like. The timer unit 806 generates time information that serves as a reference for the control timing in the computation unit 807.

**The** computation unit 807 executes time-based synchronized communication with the central device 201 via the zone communication unit 801. The computation unit 807 adjusts the time information of the timer unit 806 based on the time information received from the central device 201. The computation unit 807 executes time-based synchronized communication with the edge device 220 via the edge communication unit 802. The computation unit 807 generates time information based on the time of the timer unit 806 and transmits a synchronization packet including the time information to the edge device 220. Accordingly, the central device 201, the zone device 210, and the edge device 220 can all be synchronized in time. In this manner, the computation unit 807 functions as a time-based synchronization unit.

The timer unit 806 and the computation unit 807 are implemented by hardware such as a CPU, an ASIC, or the like. The zone communication unit 801, the edge communication unit 802, and the storage unit 803 also may be implemented by hardware such as a CPU, an ASIC, or the like.

### 1-5-4. Central Device

**FIG.** 9 illustrates an example of a function provided in the central device 201. The central device 201, for example, is provided with a main control unit 901, a zone communication unit 902, an output processing unit 903, an input processing unit 904, and a storage unit 905. The zone communication unit 902 is a communication circuit that communicates with the zone device 210 or a program module that controls such a communication circuit. The main control unit 901 determines a sequence of image-forming operations based on a print job. The output processing unit 903 generates a control command in accordance with an instruction from the main control unit 901 and transmits a control command to the zone device 210 via the zone communication unit 902. The input processing unit 904, via the zone communication unit 902, receives output information transmitted from the zone device 210 and passes the output information to the main control unit 901. The main control unit 901 feeds back the output information into the image-forming operations.

**The** storage unit 905 is provided with a non-volatile memory and a volatile memory. The storage unit 905, for example, stores a program embedded in the central device 201, configuration information related to the central device 201, processing results by the central device 201, and the like. The storage unit 905 may store configuration information of the zone device 210, configuration information of the edge device 220, and a control command for controlling the control mechanism 300. The configuration information related to the central device 201 may include identification information of the plurality of zone devices 210 connected to the central device 201. The configuration information of the zone device 210 may include identification information of the one or more edge devices 220 connected to each zone device 210. The configuration information of the edge device 220 may include identification information of the one or more control mechanisms 300 connected to each edge device 220. The main control unit 901 may determine the presence of an optional device, an appropriate control command, and the destination of a control command by referencing these pieces of configuration information.

**The** central device 201 further includes a timer unit 906 and a computation unit 907. The timer unit 906, for example, is constituted of a hardware counter that counts up at regular intervals or the like. The timer unit 906 generates time information that serves as a reference for the control timing in the main control unit 901, the computation unit 907, and the like.

**The** computation unit 907 executes time-based synchronized communication with the zone device 210 via the zone communication unit 902. The computation unit 907 generates time information based on the time of the timer unit 906 and transmits a synchronization packet including the time information to the zone device 210. In this manner, the computation unit 907 functions as a time-based synchronization unit.

**The** main control unit 901, the output processing unit 903, the input processing unit 904, the timer unit 906, and the computation unit 907 are implemented by hardware such as a CPU, an ASIC, or the like. The zone communication unit 902 and the storage unit 905 also may be implemented by hardware such as a CPU, an ASIC, or the like.

### 1-6. Connection Relationship between Devices

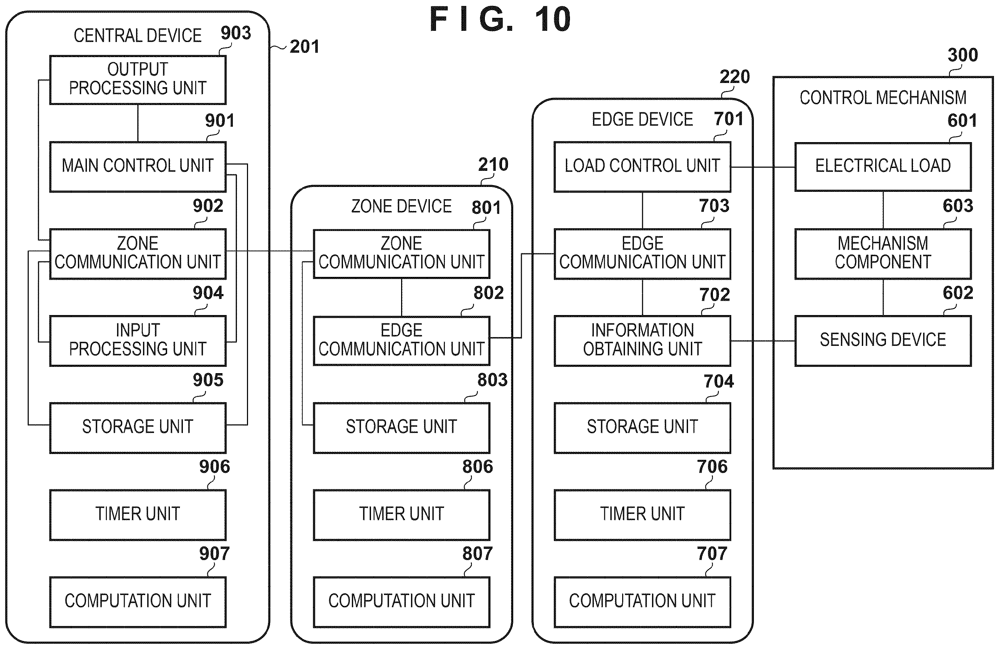

**FIG.** 10 illustrates the connection relationship between these devices. For example, in the central device 201, the main control unit 901 generates a control command (command) for executing an image-forming operation and passes the control command to the output processing unit 903. The output processing unit 903 identifies the zone device 210 corresponding to the destination of the control command from among the plurality of zone devices 210. The zone communication unit 902 transmits the control command with the identified zone device 210 as the destination.

**In** the zone device 210, the zone communication unit 801 receives the control command transmitted from the central device 201 (first processing downlink communication). The zone communication unit 801 or the edge communication unit 802 converts the control command into a control instruction based on a predetermined rule stored in the storage unit 803 and identifies the destination of the control instruction. Here, a plurality of destinations and a plurality of control instructions may be generated from a single control command. The edge communication unit 802 transmits the control instruction to the edge device 220 identified as the destination from among the plurality of edge devices 220 (second processing downlink communication).

**In** the edge device 220, the edge communication unit 703 receives the control information from the zone device 210 (second processing downlink communication). The load control unit 701 identifies the electrical load 601, which is the controlled device (load device) based on the control information and writes the control signal for controlling the identified electrical load 601 into the register 705 (see FIG. 7). The electrical load 601 is a motor, a solenoid, or the like. In the control mechanism 300, the electrical load 601 drives the mechanism component 603 (actuator) based on the control signal written into the register 705. The sensing device 602 is provided outside or inside of the electrical load 601 or inside or outside of the mechanism component 603 and detects the operation of the electrical load 601 or the mechanism component 603. The sensing device 602, for example, detects the number of rotations of the motor M1 to M14, detects the installation or removal of an insertable/removable unit with respect to the main body 10A, or the like. The sensing device 602 detects the temperature, humidity, toner density, or the like and outputs a detection signal (output signal) to the edge device 220.

**In** the edge device 220, the information obtaining unit 702 obtains the output signal output from the sensing device 602, processes the output signal as necessary, and passes the edited output signal to the edge communication unit 703. The edge communication unit 703 generates a communication packet for edge communication from the output signal and transmits the communication packet to the zone device 210 with the output signal as the payload (second processing uplink communication). Note that the edge communication unit 802 of the zone device 210 may be the master device, and the edge communication unit 703 of the edge device 220 may be the slave device. Typically, one or more slave devices are connected to a single master device, and thus there may be only one master device as the destination for the uplink.

**In** the zone device 210, the edge communication unit 802 receives the communication packet including the output signal from the edge device 220 (second processing uplink communication). The edge communication unit 802 passes the communication packet for edge communication to the zone communication unit 801. The edge communication unit 802 may retrieve the output signal from the communication packet for edge communication and pass the output signal to the zone communication unit 801. The zone communication unit 801 generates a communication packet including the output signal and transmits the communication packet to the central device 201 (first processing uplink communication). The zone communication unit 801 of the zone device 210 may be the slave device, and the zone communication unit 902 of the central device 201 may be the master device.

**In** the central device 201, the zone communication unit 902 receives the communication packet from the zone device 210 (first processing uplink communication). The zone communication unit 902 retrieves the payload (output signal) from the communication packet and passes the payload to the input processing unit 904. The input processing unit 904 processes the output signal as necessary and passes the output signal to the main control unit 901. The main control unit 901 feeds back the output signal into the image-forming operations.

When a start condition for time-based synchronized communication is satisfied, the computation unit 907 of the central device 201 obtains the current time from the timer unit 906 and generates time information based on the current time. Furthermore, the computation unit 907 generates a synchronization packet including the time information and passes the synchronization packet to the zone communication unit 902. For example, the computation unit 907 generates a synchronization packet for each zone device 210 based on a list of the zone devices 210 under the control of the central device 201. The list is stored in the storage unit 905. The zone communication unit 902 transmits the synchronization packet to the designated transmission destination (zone device 210).

When the synchronization packet is received via the zone communication unit 801, the computation unit 807 of the zone device 210 extracts the time information from the synchronization packet and adjusts the timer unit 806 based on the time information (time-based synchronization). Thereafter, the computation unit 807 obtains the current time from the timer unit 806 and generates time information based on the current time. Furthermore, the computation unit 807 generates a synchronization packet including the time information and passes the synchronization packet to the edge communication unit 802. For example, the computation unit 807 generates a synchronization packet for each edge device 220 based on a list of the edge devices 220 under the control of the zone device 210. The list is stored in the storage unit 803. The edge communication unit 802 transmits the synchronization packet to the designated transmission destination (edge device 220).

When the synchronization packet is received via the edge communication unit 703, the computation unit 707 of the edge device 220 extracts the time information from the synchronization packet and adjusts the timer unit 706 based on the time information.

### 1-7. Time-based Synchronized Communication

**As** described above, the central device 201, the zone device 210, and the edge device 220 each internally include a timer unit 906, 806, 706 for determining the control timing. By synchronizing the timer units 906, 806, and 706 via time-based synchronized communication, the entire control system 200 (image forming apparatus 10) can operate based on a shared time.

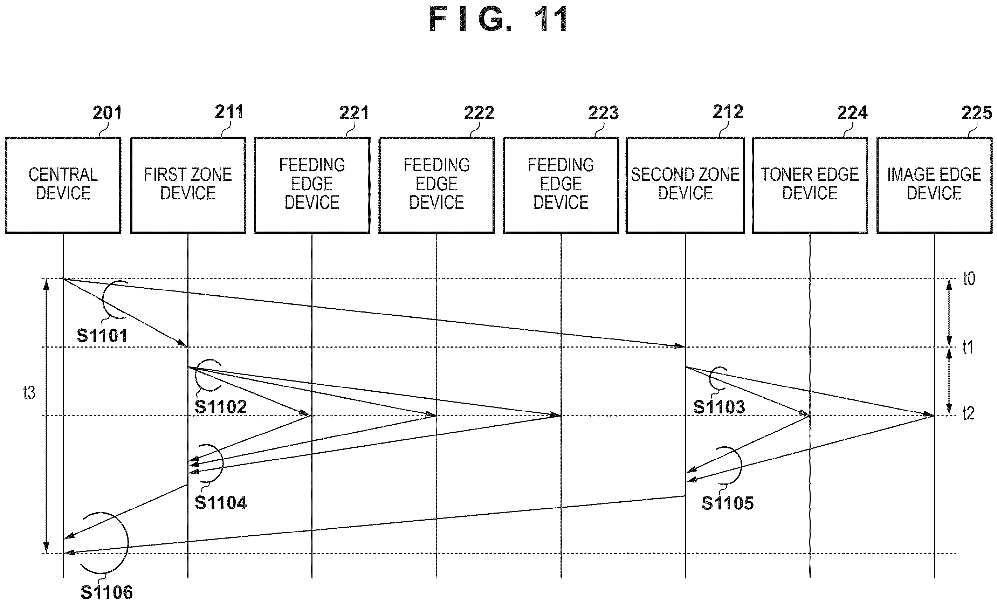

**FIG.** 11 is a sequence diagram of the time-based synchronized communication. Here, the first zone device 211 and the second zone device 212 are illustrated as representatives of the plurality of zone devices 210. However, this is merely an example. The third zone device 213 and the fourth zone device 214 also execute time-based synchronized communication in a similar manner to the first zone device 211 and the second zone device 212.

**In** S1101, the central device 201 transmits a synchronization packet to all of the zone devices 210 connected under it. The synchronization packet includes time information. The time information, for example, is the sum (t0 + t1) of time t0 which is the point in time when the central device 201 transmits the synchronization packet and a delay time t1 corresponding to the amount of time required for the synchronization packet to reach the zone device 210. The delay time t1 is assumed to be a known value. The computation unit 907, in advance, may transmit a request signal to each zone device 210, measure the round trip communication time it takes for a response signal corresponding to the request signal to be received, and halve the round trip communication time to obtain the delay time t1. During time t3 corresponding to the time from when the central device 201 transmits the synchronization packet to the time when a response packet is received from all of the zone devices 210, the central device 201 does not transmit the next communication packet.

**In** S1102 and S1103, the zone devices 210 adjust the time of their timer unit 806 based on the time information in the synchronization packet received from the central device 201. Furthermore, the zone devices 210 transmit the synchronization packet to all of the edge devices 220 connected under them. For example, the first zone device 211 transmits the synchronization packet to each feeding edge device 221, 222, and 223. The second zone device 212 transmits the synchronization packet to each of the toner edge device 224 and the image edge device 225. The time information at this time is the sum of time t0 + t1 and time t2. Time t2 is the sum of the processing time and the delay time. The processing time is the time from when the zone devices 210 receive the synchronization packet from the central device 201 to when it transmits the synchronization packet to the edge devices 220. The delay time is the amount of time required for the synchronization packet to reach the edge devices 220 from the zone devices 210. Note that time t1 and time t2 may each be a value greater than the maximum value of the actual communication delay times. During the time from when the zone devices 210 transmit the synchronization packet to the edge devices 220 to the time when response packets from all of the edge devices 220 they are connected to reach the zone devices 210, the zone devices 210 do not transmit the next communication packet.

**In** S1104 and S1105, each edge device 220 receives the synchronization packet from the zone device 210 and adjusts the time of timer unit 706 using the time information in the synchronization packet. Also, each edge device 220 transmits a response packet to the zone device 210.

**In** S1106, when each zone device 210 receives the response packet from all of the edge devices 220 connected under them, each zone device 210 transmits the response packet to the central device 201. By incorporating the plurality of received response packets into a single packet, the communication efficiency is improved. However, this is merely an example. The zone devices 210 may relay the plurality of response packets received from the plurality of edge devices 220 to the central device 201.

**When** the central device 201 has received the response packets from all of the zone devices 210 connected under it, the central device 201 ends the time-based synchronized communication. Alternatively, when the central device 201 has received the response packet from all of the zone devices 210 and all of the edge devices 220, the central device 201 may end the time-based synchronized communication. Accordingly, the central device 201 re-allows the transmission of communication packets.

**In** this manner, by performing time-based synchronized communication via the transmission and reception of synchronization packets, time-based synchronization between devices can be achieved without a dedicated signal line (for example, a status line).

### 1-8. Flowchart

### 1-8-1. Central Device

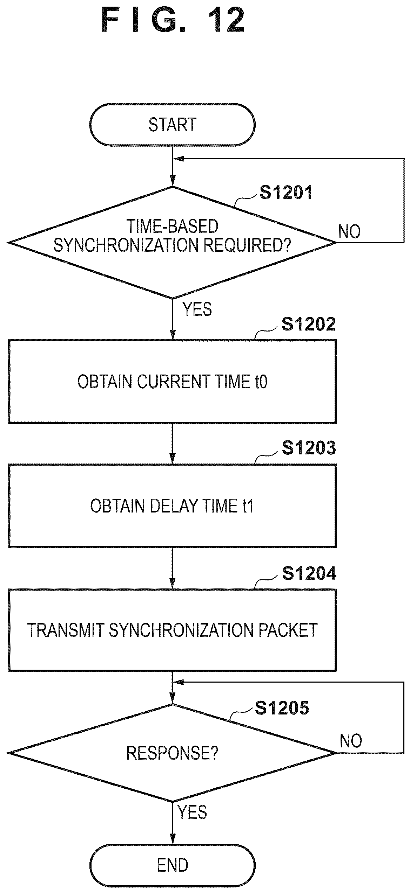

**FIG.** 12 is a flowchart illustrating the time-based synchronized communication executed by the CPU (computation unit 907) of the central device 201.

**In** S1201, the computation unit 907 determines whether or not time-based synchronization is required. For example, the computation unit 907 determines whether or not the start condition for time-based synchronized communication stored in the storage unit 905 is satisfied. The start condition may be one of a regular interval, when a predetermined control error has occurred, when the image forming apparatus 10 is activated, when a print job is submitted, or the like. In a case where time-based synchronization is required, the computation unit 907 advances the processing from S1201 to S1202.

**In** S1202, the computation unit 907 obtains the current time t0 from the timer unit 906. The current time t0 corresponds to the time when the synchronization packet is transmitted.

**In** S1203, the computation unit 907 obtains the delay time t1. The delay time t1 is read out from the storage unit 905, for example.

**In** S1204, the computation unit 907 generates a synchronization packet based on the current time t0 and the delay time t1 and transmits the synchronization packet to all of the zone devices 210 under its control. The synchronization packet includes the sum (time information) of the current time t0 and the delay time t1.

**In** S1205, the computation unit 907 determines whether or not there has been a response from all of the zone devices 210 under its control. For example, when a response packet has been received from all of the zone devices 210, the computation unit 907 ends the time-based synchronized communication.

### 1-8-2. Zone Device

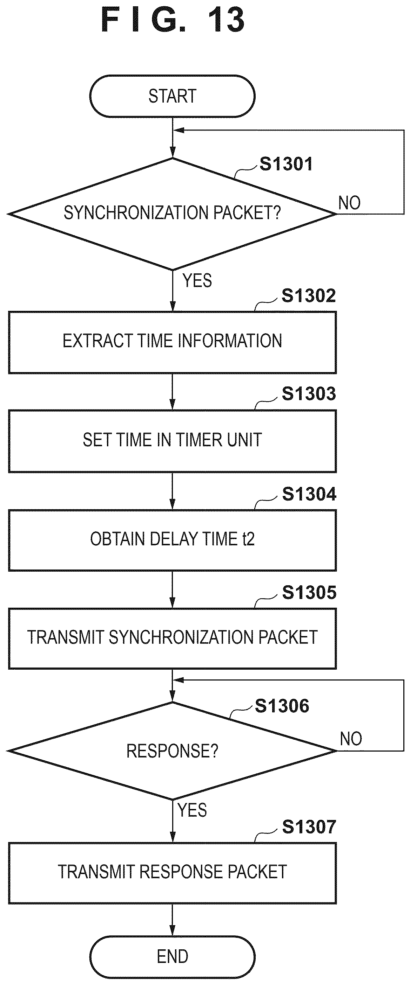

**FIG.** 13 is a flowchart illustrating the time-based synchronized communication executed by the CPU (computation unit 807) of the zone device 210.

**In** S1301, the computation unit 807 determines whether or not a synchronization packet has been received from the central device 201. In a case where a synchronization packet has been received, the computation unit 807 advances the processing from S1301 to S1302.

**In** S1302, the computation unit 807 extracts the time information from the synchronization packet.

**In** S1303, the computation unit 807 sets the time information in the timer unit 806.

**In** S1304, the computation unit 807 obtains the delay time t2. The delay time t2 is read out from the storage unit 803, for example.

**In** S1305, the computation unit 807 transmits a synchronization packet including the time information to all of the edge devices 220 under its control. For example, the computation unit 807 generates the time information based on the time information t0 + t1 and the delay time t2 extracted from the synchronization packet received from the central device 201. For example, the time information includes the sum (t0 + t1 + t2) of the time information t0 + t1 and the delay time t2.

**In** S1306, the computation unit 807 determines whether or not there has been a response from all of the edge devices 220 under its control. For example, when a response packet has been received from all of the edge devices 220, the computation unit 807 advances the processing from S1306 to S1307.

**In** S1307, the computation unit 807 transmits the response packet to the central device 201. Accordingly, the computation unit 807 ends the time-based synchronized communication.

### 1-8-3. Edge Device

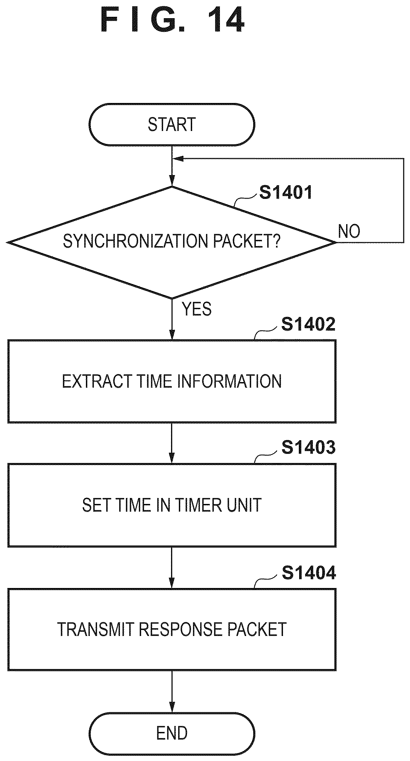

**FIG.** 14 is a flowchart illustrating the time-based synchronized communication executed by the CPU (computation unit 707) of the edge device 220.

**In** S1401, the computation unit 707 determines whether or not a synchronization packet has been received from the zone device 210. In a case where a synchronization packet has been received, the computation unit 707 advances the processing from S1401 to S1402.

**In** S1402, the computation unit 707 extracts the time information from the synchronization packet.

**In** S1403, the computation unit 707 sets the time information in the timer unit 706.

**In** S1404, the computation unit 707 transmits the response packet to the zone device 210. Accordingly, the computation unit 707 ends the time-based synchronized communication.

### 1-9. Summary

**The** central device 201, the zone device 210, and the edge device 220 are examples of a plurality of control devices. The communication lines 202 and 203 are examples of communication lines for communication between a plurality of control devices. The central device 201 is an example of a first control device. The zone communication unit 902 and the computation unit 907 are examples of a first communication unit. A first communication mode is a communication mode in which a control instruction is transmitted to at least one second control device or information is received from the at least one second control device. The zone devices 210 such as the first zone device 211, the second zone device 212, the third zone device 213, and the fourth zone device 214 are examples of the at least one second control device. A second communication mode is a communication mode in which time-based synchronized communication is executed. The second communication mode is a communication mode in which, in the at least one second control device, time information for synchronizing the time that serves as a reference for the execution timing of the control instruction is communicated. The timer unit 906 is an example of a first timer that indicates the time that serves as a reference for the time-based synchronization in the second communication mode.

**In** this manner, by providing a second communication mode for performing time-based synchronized communication, the number of signal lines required for communication can be reduced and the time-based synchronization can be achieved. For example, a dedicated signal line for time-based synchronization is made unnecessary.

**The** zone communication unit 801 is an example of a second communication unit that communicates a control instruction and time information. The timer unit 806 is an example of a second timer that indicates the time that serves as a reference for the execution timing of the control instruction. The computation unit 807 functions as a first adjustment unit that adjusts the time of the second timer based on the time information received from the first control device.

As illustrated in FIGS. 11 and 12, the zone communication unit 902, which is the first communication unit, transmits the time information to all of the plurality of second control devices in the second communication mode. Accordingly, time-based synchronization can be achieved for the at least one second control device under the control of the first control device collectively.

As described in relation to FIGS. 11 and 12, the time information is generated based on the time (for example, t0) obtained from the first timer (the timer unit 906) and the delay time (for example, t1). The delay time is the amount of time corresponding to the signal propagation time between the first control device and the second control device. Accordingly, the second control device can set the time information received from the first control device to the second timer unchanged. However, this is merely an example. The second control device may obtain in advance the delay time (for example, t1) and may add the delay time (for example, t1) to the time information (t0) received from the first control device.

As illustrated in FIG. 11 and the like, the second communication unit (for example, the zone communication unit 801) transmits a response signal (for example, a response packet) to the first control device when the first adjustment unit (for example, the computation unit 807) ends the adjustment of the second timer (for example, the timer unit 806). When the first control device (for example, the central device 201) receives the response signal, the first control device ends the second communication mode (for example, the time-based synchronized communication). In this manner, by using a response signal, time-based synchronization between a plurality of control devices existing in a control system 200 may be accurately achieved.

As illustrated in FIGS. 11, 13, and the like, the edge communication unit 802 and the computation unit 807 are examples of a third communication unit that communicates with at least one third control device (for example, the edge device 220). The third communication unit, in the first communication mode, transmits a control instruction to the third control device or receives information from the third control device. The third communication unit, in the second communication mode, communicates the time information for synchronizing the time that serves as a reference for the execution timing of the control instruction in the third control device. Accordingly, the third control device under the control of the second control device can also achieve time-based synchronization with the second control device and the first control device.

As illustrated in FIG. 7, the edge communication unit 703 functions as a fourth communication unit that receives a control instruction and time information from the second control device. The timer unit 706 is an example of a third timer that indicates the time that serves as a reference for the execution timing of the control instruction. The computation unit 707 functions as a second adjustment unit that adjusts the time of the third timer based on the time information received from the second control device.

The time information is also transmitted from the second control device to the third control device. The time information is generated based on the time (for example, t0), the delay time (for example, t1), and the delay time (for example, t2) corresponding to the signal propagation time between the second control device and the third control device. Accordingly, the third control device can set the time information received from the second control device to the third timer unchanged. However, this is merely an example. The third control device may obtain in advance the delay time (for example, t2) and may add the delay time (for example, t2) to the time information (for example, t0 + t1) received from the second control device. Alternatively, the third control device may obtain in advance the delay time (for example, t1 + t2) and may add the delay time (for example, t1 + t2) to the time information (for example, t0) received from the second control device.

As illustrated in FIGS. 11 and 14, the third communication unit (for example, the edge communication unit 703 and the computation unit 707) transmits a response signal (for example, a response packet) to the second control device when the second adjustment unit ends the adjustment of the third timer. When the second control device (for example, the zone device 210) receives a response signal from all of the at least one third control device, the second control device may transmit the response signal to the first control device. This contributes to achieving reliable time synchronization with all of the control devices existing in the control system 200.

**The** second communication mode (for example, the time-based synchronized communication) is prioritized over the first communication mode (for example, communication of a control instruction and communication for obtaining information). Accordingly, a control instruction may be executed based on a time with accurate execution timing. Obtaining of information may also be executed at an accurate time.

### 2. Second Embodiment Example

**In** the first embodiment example, time-based synchronized communication with all of the devices existing in the control system 200 is executed collectively. However, this is merely an example. In the second embodiment example, limited time-based synchronized communication with only a specified device existing in the control system 200 as a target will be described. The time-based synchronized communication with all of the devices as a target described in the first embodiment example is referred to as all time-based synchronized communication (collective synchronization mode). The limited time-based synchronized communication is referred to as limited synchronization mode.

### 2-1. Time-based Synchronization Sequence

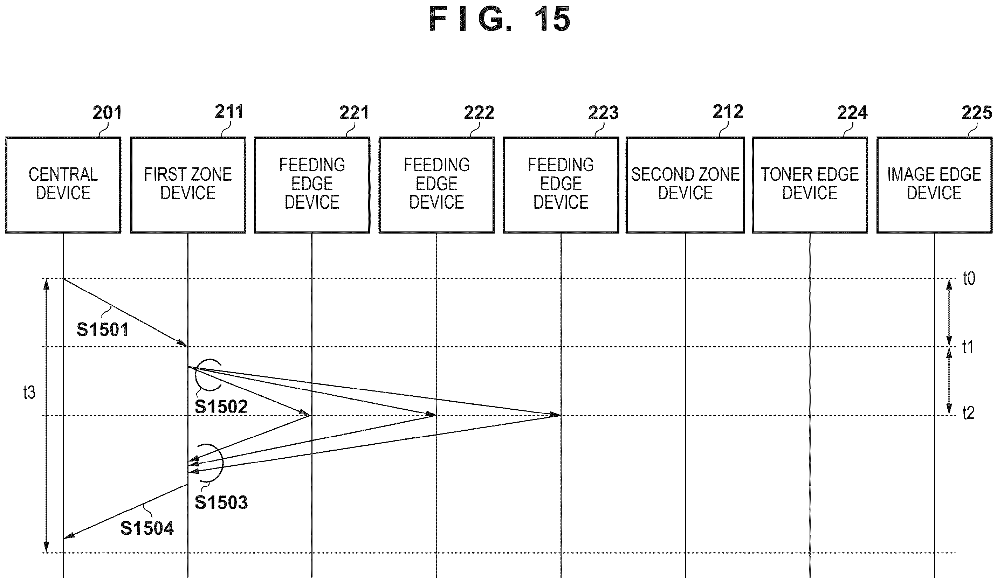

**FIG.** 15 is a sequence diagram of limited synchronization mode. Here, the first zone device 211 and the second zone device 212 are illustrated as representatives of the plurality of zone devices 210. Also, as the zone device 210 which is the synchronization target, the first zone device 211 is used. The zone device 210 which is the synchronize target may be two or more zone devices 210. For example, the second zone device 212 and the third zone device 213 may be selected as synchronization targets.

**In** S1501, the central device 201 transmits a synchronization packet to the specified zone device 210. The synchronization packet includes time information. The time information, for example, is the sum (t0 + t1) of time t0 which is the point in time when the central device 201 transmits the synchronization packet and a delay time t1 corresponding to the amount of time required for the synchronization packet to reach the zone device 210. The delay time t1 is assumed to be a known value. The computation unit 907, in advance, may transmit a request signal to the specified zone device 210, measure the round trip communication time it takes for a response signal corresponding to the request signal to be received, and halve the round trip communication time to obtain the delay time t1. During time t3 corresponding to the time from when the central device 201 transmits the synchronization packet to the time when a response packet is received from the specified zone device 210, the central device 201 does not transmit the next communication packet.

**In** S1502, the zone devices 210 adjust the time of their timer unit 806 based on the time information in the synchronization packet received from the central device 201. Furthermore, the zone device 210 transmits the synchronization packet to all of the edge devices 220 connected under it. Here, the first zone device 211 is the specified zone device 210. Thus, the synchronization packet is transmitted to each of the feeding edge devices 221, 222, and 223. The time information at this time is the sum of time t0 + t1 and time t2. Time t2 is the sum of the processing time and the delay time. The processing time is the time from when the zone device 210 receives the synchronization packet from the central device 201 to when it transmits the synchronization packet to the edge devices 220. The delay time is the amount of time required for the synchronization packet to reach the edge devices 220 from the zone device 210. Note that time t1 and time t2 may each be a value greater than the maximum value of the actual communication delay times. During the time from when the specified zone device 210 transmits the synchronization packet to the edge devices 220 to the time when response packets from the edge devices 220 reach the specified zone device 210, the specified zone device 210 does not transmit the next communication packet. Note that the central device 201 can transmit a communication packet to other zone devices 210 (for example, the second zone device 212, the third zone device 213, and the fourth zone device 214) excluding the specified zone device 210 (for example, the first zone device 211). In other words, the central device 201 can also transmit a communication packet (for example, a control instruction) to each edge device 220 under the control of the other zone devices 210.

**In** S1503, each edge device 220 receives the synchronization packet from the specified zone device 210 and adjusts the time of timer unit 706 using the time information in the synchronization packet. Also, each edge device 220 transmits a response packet to the specified zone device 210.

**In** S1504, when the specified zone device 210 receives the response packet from all of the edge devices 220 connected under it, the specified zone device 210 transmits the response packet to the central device 201.

**When** the central device 201 has received the response packets from the specified zone device 210, the central device 201 ends the time-based synchronized communication. Accordingly, the central device 201 re-allows the transmission of communication packets.

**In** this manner, time-based synchronized communication is achieved via the transmission and reception of synchronization packets. Accordingly, time-based synchronization between devices can be achieved without a dedicated signal line.

**In** the second embodiment example, the limited synchronization mode is used as a sub mode of the time-based synchronized communication. Accordingly, in a standby period (for example, t3) in which the central device 201 waits for a response packet, a communication packet can be transmitted to the other zone devices 210 excluding the specified zone device 210. This improves communication efficiency.

### 2-2. Flowchart

### 2-2-1. Central Device

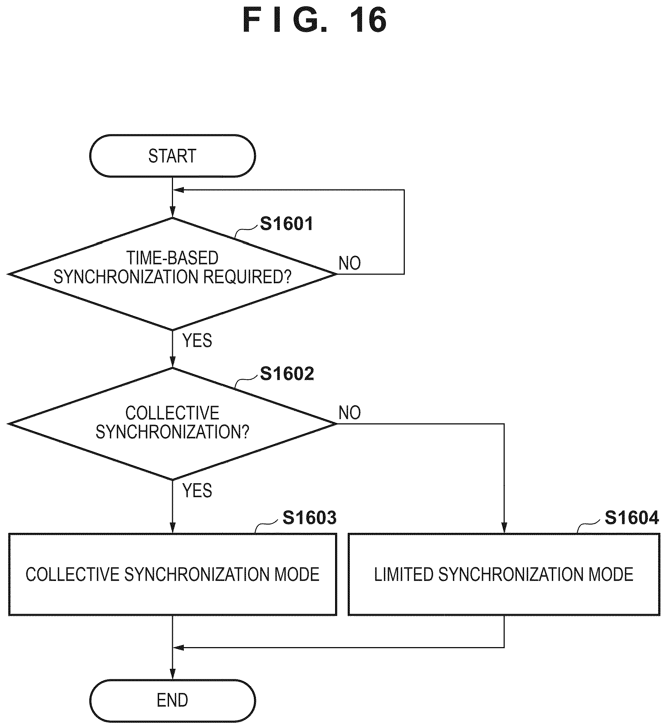

**FIG.** 16 is a flowchart illustrating the time-based synchronized communication executed by the CPU (computation unit 907) of the central device 201.

In S1601, the computation unit 907 determines whether or not time-based synchronization is required. For example, the computation unit 907 determines whether or not the start condition for time-based synchronized communication stored in the storage unit 905 is satisfied. The start condition may be one of a regular interval, when a predetermined control error has occurred, when the image forming apparatus 10 is activated, or the like. In a case where time-based synchronization is required, the computation unit 907 advances the processing from S1601 to S1602.

In S1602, the computation unit 907 determines whether or not collective synchronization is required. For example, the execution frequency of the limited synchronization mode and the execution frequency of the collective synchronization mode may differ in some cases. A misalignment in time involving the first zone device 211 that controls feeding and the third zone device 213 that controls image formation may cause an image defect. Thus, a high time-based synchronization accuracy is required by these devices. On the other hand, the time-based synchronization accuracy required by the other zone devices 210 does not need to be as high. Thus, the central device 201 executes time-based synchronized communication in the collective synchronization mode at a print job starting time. Thereafter, for each page, the central device 201 executes time-based synchronized communication in the limited synchronization mode for the first zone device 211 and the third zone device 213. In this manner, in a case where high time-based synchronization accuracy is required by the specified zone device 210, the limited synchronization mode is effective. By the central device 201 executing the limited synchronization mode at high frequency, a high time-based synchronization accuracy is maintained for the specified zone device 210.

In a case where collective synchronization is required, the computation unit 907 advances the processing from S1602 to S1603. In S1603, the computation unit 907 executes the collective synchronization mode. In a case where collective synchronization is not required, the computation unit 907 advances the processing from S1602 to S1604. In S1604, the computation unit 907 executes the limited synchronization mode.

In this manner, the central device 201 can efficiently execute time-based synchronization between devices by selectively using the collective synchronization mode and the limited synchronization mode.

### 2-2-2. Collective Synchronization Mode

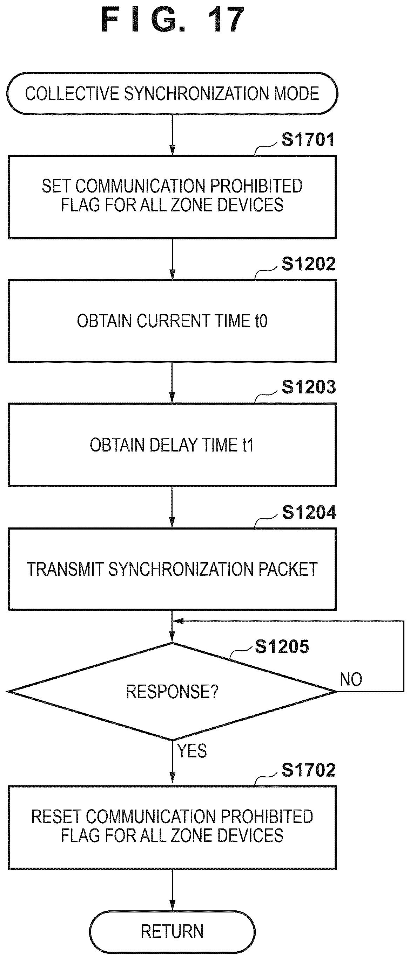

FIG. 17 is a flowchart illustrating the collective synchronization mode executed by the CPU (computation unit 907) of the central device 201. Compared to FIG. 12, in FIG. 17, S1701 has been added before S1202. Also, S1702 has been added after S1205. From S1202 to S1205 is as already described.

**In** S1701, the computation unit 907 sets a communication prohibited flag for all of the zone devices 210 under its control.

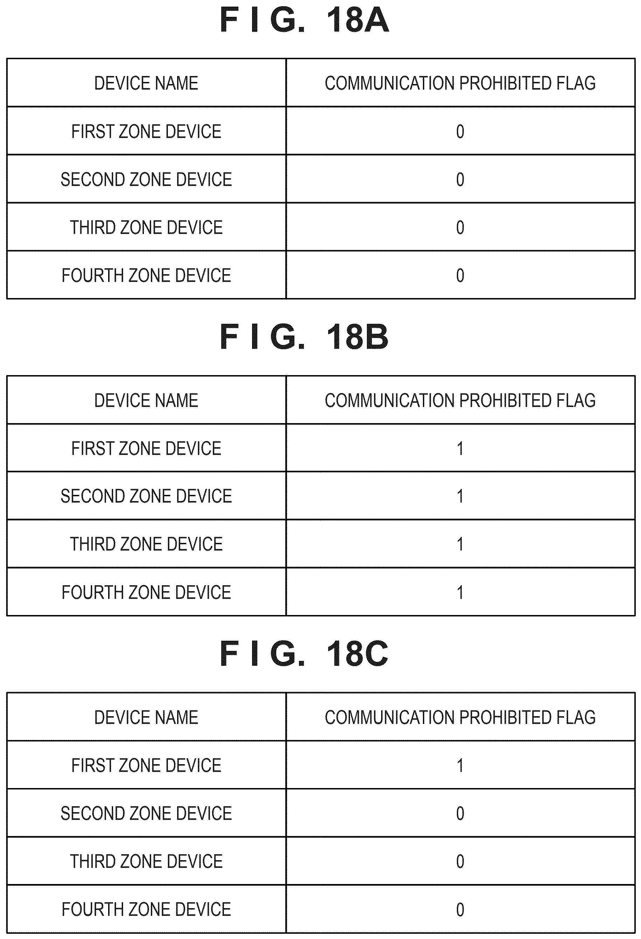

FIG. 18A illustrates the communication prohibited flags in the initial state. A communication prohibited flag for each zone device 210 is stored in the storage unit 905. In the initial state, the communication prohibited flags for each zone device 210 are reset.

FIG. 18B illustrates the communication prohibited flags in the collective synchronization mode. In the collective synchronization mode, the central device 201 prohibits transmission of communication packets to all of the zone devices 210. However, transmission of synchronization packets related to time-based synchronized communication and reception of response packets are allowed. Thus, when a transmission request for the specified zone device 210 occurs, the central device 201 prohibits or allows transmission of a communication packet by checking the communication prohibited flag associated with the specified zone device 210.

In S1205, when a response packet is received from all of the zone devices 210, the computation unit 907 advances the processing from S1205 to S1702.

In S1702, the computation unit 907 resets the communication prohibited flags for all of the zone devices 210. In other words, the communication prohibited flags are returned to the initial state illustrated in FIG. 18A from the communication prohibited state illustrated in FIG. 18B.

### 2-2-3. Limited Synchronization Mode

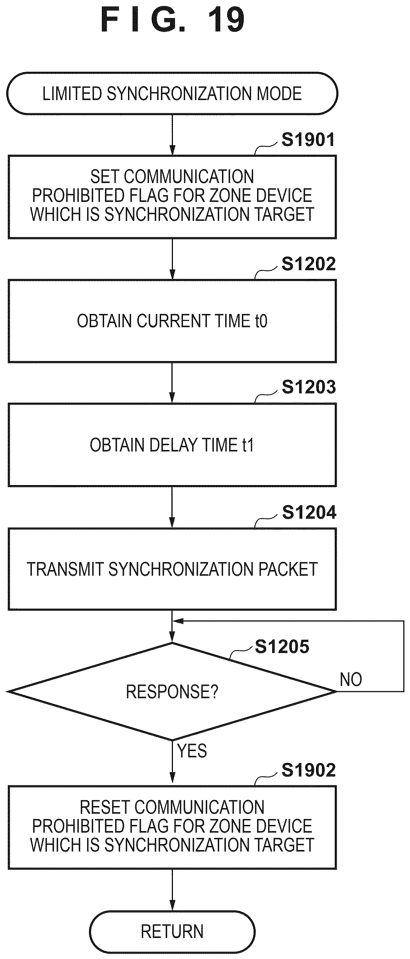

FIG. 19 is a flowchart illustrating the limited synchronization mode executed by the CPU (computation unit 907) of the central device 201. Compared to FIG. 12, in FIG. 19, S1901 has been added before S1202. Also, S1902 has been added after S1205. From S1202 to S1205 is as already described. However, in S1204, a synchronization packet is transmitted to only the specified zone device 210.

In S1901, the computation unit 907 sets the communication prohibited flag for the zone device 210 which is the synchronization target.

FIG. 18C illustrates the communication prohibited flag in a case where the first zone device 211 is the synchronization target. The communication prohibited flag of the first zone device 211 is set. The communication prohibited flags for the other zone devices 210 are all reset. Thus, communication with the first zone device 211 which is the synchronization target is prohibited, but communication with the other zone devices 210 is allowed. Transmission of a synchronization packet to the first zone device 211 and reception of a response packet from the first zone device 211 are allowed.

In S1205, when a response packet is received from the zone device 210 which is the synchronization target, the computation unit 907 advances the processing from S1205 to S1902.

In S1902, the computation unit 907 resets the communication prohibited flag for the zone device 210 which is the synchronization target. In other words, the communication prohibited flags are returned to the initial state illustrated in FIG. 18A from the communication prohibited state illustrated in FIG. 18C.

### 2-2-3. Communication Method Taking into Account Communication Prohibited Flag

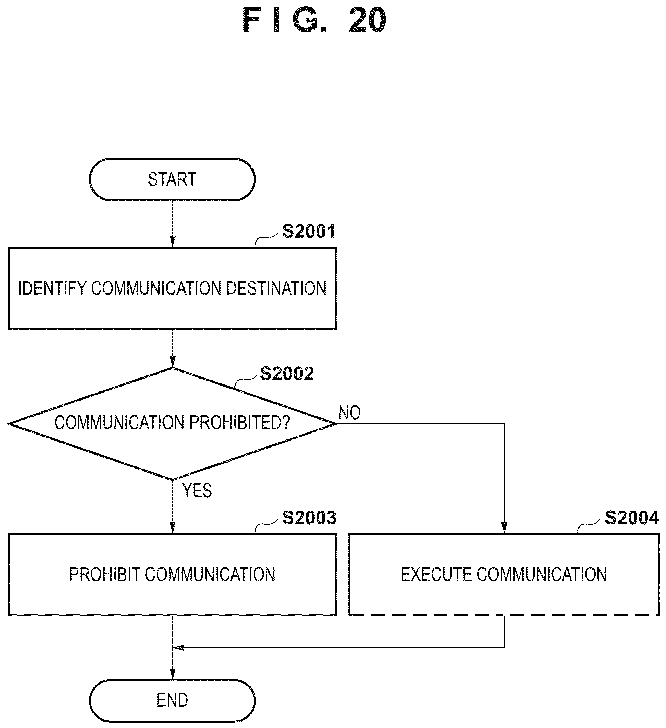

FIG. 20 illustrates a communication method taking into account the communication prohibited flag executed by the central device 201. The communication method is executed in parallel with the time-based synchronized communication.

In S2001, the computation unit 907 identifies the communication destination associated with the communication request. For example, the communication request is a control instruction for the specified edge device 220. The computation unit 907 identifies the edge device 220 based on the destination of the control instruction and identifies the zone device 210 that controls the identified edge device 220 as the communication destination.

In S2002, the computation unit 907 reads out the communication prohibited flag associated with the identified communication destination from the storage unit 905 and determines whether or not communication with the identified communication destination is prohibited based on the communication prohibited flag. For example, in a case where the communication prohibited flag of the first zone device 211 is 1, communication with the first zone device 211 is prohibited. In a case where communication is prohibited, the computation unit 907 advances the processing from S2002 to S2003. In S2003, the computation unit 907 prohibits communication with the specified communication destination by returning "communication prohibited" to the issuer (for example, the main control unit 901) that issued the communication request.

In a case where communication with the specified communication destination is allowed, the computation unit 907 advances the processing from S2002 to S2004. In S2004, the computation unit 907 executes communication with the specified communication destination by returning "communication allowed" to the issuer (for example, the main control unit 901) that issued the communication request. Alternatively, the computation unit 907 passes the control instruction corresponding to the communication request target to the zone communication unit 902. Accordingly, the main control unit 901 can transmit a control instruction to the specified communication destination via the zone communication unit 902.

### 2-3. Summary

As illustrated in FIGS. 15 and 19, the first communication unit (for example, the zone communication unit 902), in the second communication mode, transmits the time information to the specified second control device (for example, the first zone device 211 and the third zone device 213) of the plurality of second control devices. In this manner, the specified control device can achieve time-based synchronization at a high accuracy.

The first communication unit (for example, the zone communication unit 902) can communicate with the specified second control device in the second communication mode in parallel with communicating with the other second control devices (for example, the second zone device 212 and the fourth zone device 214) in the first communication mode. This can improve communication efficiency. Note that the other second control devices are different from the specified second control device.

As described in the second embodiment example, the time-based synchronization accuracy required by the specified second control device is higher than the time-based synchronization accuracy required by the other second control devices. In such a case, the limited synchronization mode is effective.

The collective synchronization mode is an example of a first sub mode in which time information is transmitted to all of the plurality of second control devices. The limited synchronization mode is an example of a second sub mode in which time information is transmitted to a specified second control device of the plurality of second control devices. The main control unit 901 or the computation unit 907 switches the sub mode according to the control state of the image forming apparatus 10. This can improve the communication efficiency in accordance with each control state.

The execution frequency of the second sub mode is higher than the execution frequency of the first sub mode. In other words, the specified second control device using the second sub mode can achieve a relatively higher time-based synchronization accuracy.

As illustrated in FIG. 17 and the like, when the second communication mode is started, communication via the first communication mode to all of the at least one second control device is limited. When a response signal is received from all of the at least one second control device, the limitation on communication via the first communication mode to the second control devices is disabled. In this manner, the second communication mode is prioritized over the first communication mode.

As illustrated in FIG. 19 and the like, when the second communication mode is started, the first communication unit (for example, the zone communication unit 902) limits communication via the first communication mode to the specified second control device. When a response signal is received from the specified second control device, the first communication unit (for example, the zone communication unit 902) disables the limitation on communication via the first communication mode to the specified second control device.

### 3. Modification Example

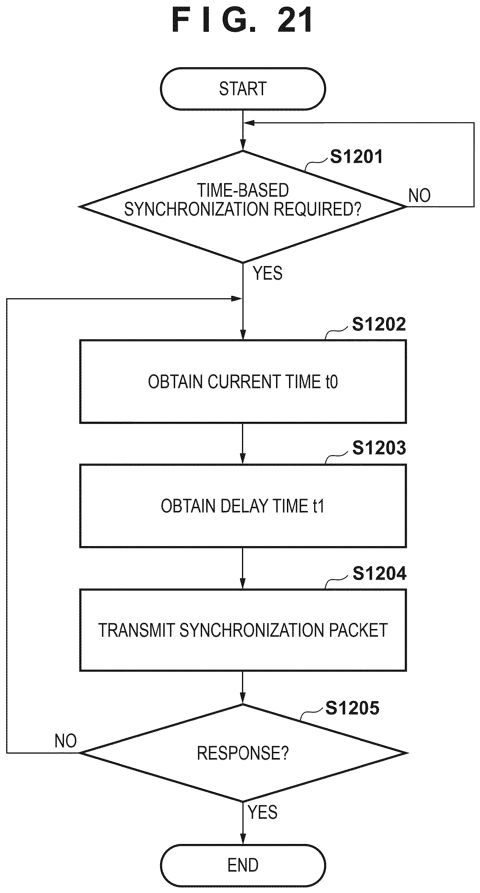

According to FIG. 12, the central device 201 is in standby until a response packet is returned from all of the zone devices 210. However, this is merely an example. As illustrated in FIG. 21, in a case where a response packet is not returned from all of the zone devices 210 even after a certain amount of time has passed, the computation unit 907 may return the processing from S1205 to S1202 and re-transmit the synchronization packet. In this manner, time-based synchronization is reliably obtained.

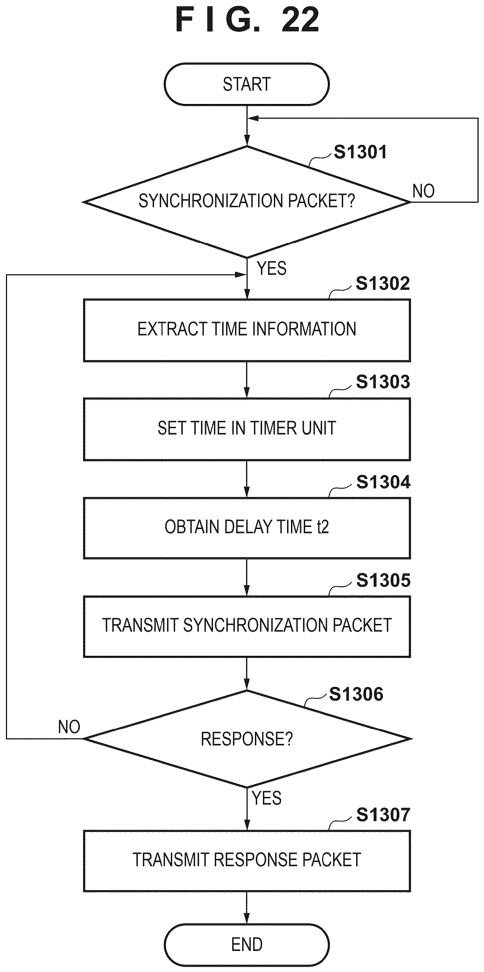

This same applies to the zone device 210. As illustrated in FIG. 22, in a case where a response packet is not returned from all of the zone devices 210 even after a certain amount of time has passed, the computation unit 907 may return the processing from S1306 to S1302 and re-transmit the synchronization packet. In this manner, time-based synchronization is reliably obtained.

Accordingly, when the first control device (for example, the central device 201) receives the response signal from all of the at least one second control device, the first control device ends the second communication mode. If the first control device (for example, the central device 201) cannot receive a response signal from all of the at least one second control device, the first control device may re-transmit the time information to the second control device.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An image forming apparatus (10) comprising:
a plurality of control devices (201; 210; 220) including at least a first control device and a second control device; and
a communication line (202; 203) for communication between the plurality of control devices,
wherein the first control device includes
first communication means (902; 907) for, in a first communication mode, transmitting a control instruction to the second control device or receiving information from the second control device, and, in a second communication mode, communicating time information for synchronizing a time that serves as a reference for execution timing of the control instruction in the second control device, and
first timer means (906) for indicating a time that serves as a reference for time-based synchronization in the second communication mode.

2. The image forming apparatus according to Claim 1, wherein
the a second control device includes
second communication means (801) for communicating the control instruction and the time information,
second timer means (806) for indicating a time that serves as a reference for execution timing of the control instruction, and
first adjustment means (807) for adjusting a time of the second timer based on the time information received from the first control device.

3. The image forming apparatus according to Claim 1 or 2, wherein
the plurality of the control devices includes a plurality of the second control devices, and
the first communication means is further adapted to transmit the time information to all of the plurality of second control devices in the second communication mode.

4. The image forming apparatus according to Claim 1 or 2, wherein
the plurality of the control device includes a plurality of the second control devices, and
the first communication means is further adapted to transmit the time information to a specified second control device among the plurality of second control devices in the second communication mode.

5. The image forming apparatus according to Claim 4, wherein the first communication means is further adapted to communicate in the second communication mode with the specified second control device among the plurality of second control devices in parallel with communicating in the first communication mode with another second control device different from the specified second control device among the plurality of second control devices.

6. The image forming apparatus according to Claim 5, wherein a time-based synchronization accuracy in the specified second control device is higher than a time-based synchronization accuracy in the other second control device.

7. The image forming apparatus according to Claim 1, wherein
the plurality of control device includes a plurality of the second control devices, and
the second communication mode includes
a first sub mode in which the time information is transmitted to all of the plurality of second control devices, and
a second sub mode in which the time information is transmitted to a specified second control device among the plurality of second control devices.

8. The image forming apparatus according to Claim 7, wherein an execution frequency of the second sub mode is higher than an execution frequency of the first sub mode.

9. The image forming apparatus according to any one of Claims 1 to 8, wherein the time information is generated based on a time obtained from the first timer means and a delay time corresponding to a signal propagation time between the first control device and the second control device.

10. The image forming apparatus according to Claim 2, wherein
the second communication means is further adapted to transmit a response signal to the first control device when the first adjustment means completes adjustment of the second timer means, and
when the first control device receives the response signal, the first control device ends the second communication mode.

11. The image forming apparatus according to Claim 2, wherein
the plurality of control devices include a third control device,
the at second control device further includes third communication means (802; 807) adapted to communicate with the third control device, and
the third communication means is further adapted to, in the first communication mode, transmit a control instruction to the third control device or receive information from the third control device, and, in the second communication mode, communicate time information for synchronizing a time that serves as a reference for execution timing of the control instruction in the third control device.

12. The image forming apparatus according to Claim 11, wherein
the third control device includes
fourth communication means (703) for receiving the control instruction and the time information from the second control device,
third timer means (706) for indicating a time that serves as a reference for execution timing of the control instruction, and
second adjustment means (707) for adjusting a time of the third timer based on the time information received from the second control device.

13. The image forming apparatus according to Claim 12, wherein the time information transmitted from the second control device to the third control device is generated based on a time obtained from the first timer means, a delay time corresponding to a signal propagation time between the first control device and the second control device, and a delay time corresponding to a signal propagation time between the second control device and the third control device.

14. The image forming apparatus according to Claim 12 or 13, wherein
the third communication means is further adapted to transmit a response signal to the second control device when the second adjustment means completes adjustment of the third timer means, and
when the second control device receives the response signal from all of the third control device, the second control device transmits a response signal to the first control device.

15. The image forming apparatus according to Claim 10, wherein
the first control device ends the second communication mode when the first control device receives the response signal from the second control device, and
the first control device re-transmits the time information to the second control device if the first control device does not receive the response signal from the second control device.

16. The image forming apparatus according to any one of Claims 1 to 15, wherein the second communication mode is prioritized over the first communication mode.

17. The image forming apparatus according to Claim 10, wherein
the first control device limits communication via the first communication mode to the second control device when the second communication mode is started, and
the first control device disables limitation on communication via the first communication mode to the second control device when the first control device receives the response signal from the second control device.

18. The image forming apparatus according to Claim 5 or 6, wherein the first communication means is further adapted to limit communication via the first communication mode to the specified second control device when the second communication mode is started, and disable limitation on communication via the first communication mode to the specified second control device when the first communication means receives a response signal from the specified second control device.
